# EUROPEAN PATENT SPECIFICATION

(11) **EP 3 873 787 B1**
(45) Date of publication and mention of the grant of the patent: **07.06.2023**
(21) Application number: 19798220.0
(22) Date of filing: 30.10.2019
(51) Int. Cl.: B61B 13/08, B61B 13/10, B61F 5/02, B60L 13/04

(54) **RAILWAY VEHICLE WITH TILTING CARRIAGE AND RAILWAY SYSTEM THEREFOR**
SCHIENENFAHRZEUG MIT KIPPWAGEN UND SCHIENENSYSTEM DAFÜR
VÉHICULE FERROVIAIRE À VOITURE PENDULAIRE ET SYSTÈME DE CHEMIN DE FER ASSOCIÉ

(30) Priority: 30.10.2018 PL 42762318
(43) Date of publication of application: 08.09.2021
(73) Proprietor: Hyper Poland Spolka Z Ograniczona Odpowiedzialnoscia, 00095 Warsaw (PL)
(72) Inventor: RADZISZEWSKI, Pawel, 02790 Warsaw (PL); KUBLIN, Tomasz, 02-549 Warszawa (PL); SWIATEK, Grzegorz, 08-110 Siedlce (PL)
(74) Representative: reuteler & cie SA
(86) International application number: PCT/EP2019/079708
(87) International publication number: WO 2020/089320

(56) References cited:
- WO-A1-01/30630
- WO-A2-2012/101535
- DE-A1- 2 156 366
- JP-A- H05 162 643
- JP-B2- 5 184 111
- KR-B1- 101 881 002
- US-A1- 2018 186 389

## Description

### Field of the Invention

The present invention relates to a railway system, having a railway vehicle with a tilting carriage. The railway vehicle may be for use in vacuum tube railway systems with magnetic levitation railway tracks, or may be for use in non-vacuum systems and on conventional wheel railway tracks.

### Background of the Invention

It is known to provide conventional railway vehicles with a tilting mechanism that tilts the carriage to compensate for centrifugal forces when the vehicle is moving in a curve. Railway tracks are often inclined in curves in order to provide partial compensation for the centrifugal forces. In many railway networks, the angle of inclination of railway tracks is usually limited to about 8° or less. Since the angle of inclination is dependent on the velocity of the railway vehicle, the active tilt mechanism can adjust the angle of inclination of the carriage depending on the velocity. A titling system in a conventional vehicle is known from JP H05 162643 A.

Due to increasing velocities of railway vehicles, or due to the implementation of new railway vehicles in existing infrastructures, higher tilt angles may be required than many conventional systems are capable of providing. Moreover, in existing systems the power required for tilting carriages is quite high, leading to an increase in weight of the vehicle due to the higher power requirements, and high energy consumption.

Especially in vacuum tube systems with magnetically levitated vehicles, in view of the very high velocities achieved, the weight and power requirements of a tilting mechanism according to conventional systems adversely affect performance and comfort of the train. Higher demands on the tilting system also have an adverse effect on reliability and safety.

WO 2012/101536 A2 discloses a magnetic levitation or suspension vehicle with a body that can be rotated to counter centrifugal force.

### Summary of the Invention

In view of the foregoing, it is an object of the invention to provide a railway system having railway vehicles with tilting carriages that has high performance and ride comfort, and low energy consumption.

It is advantageous to provide with railway vehicles having tilting carriages that can easily adapt to low and high speed operation in a reliable and economical manner.

It is advantageous to provide a railway system with railway vehicles having tilting carriages that is safe, including in case of power failure.

It is advantageous, in applications for vacuum tube magnetic levitation railway systems to be able to adapt easily to very high speeds with reliable and safe performance yet low power consumption.

Objects of the invention have been achieved by providing the system according to claim 1.

Disclosed herein is a railway system comprising a railway vehicle movable along a railway guide system, the railway vehicle comprising a chassis and a carriage rotatably supported on the chassis via a pivot coupling. The railway vehicle further comprises a pivot actuation system comprising an actuator and a control system connected to the actuator and to sensors for actuation and control of the rotation of the carriage relative to the chassis. The carriage is rotationally supported relative to the chassis about a pivot axis that remains in a static position with respect to the chassis, the carriage having a mass distribution forming a centre of gravity positioned below the pivot axis, the pivot actuation system serving to assist and dampen passive rotation of the carriage relative to the chassis due to the torque generated by centrifugal force acting upon the centre of gravity about the pivot axis.

In an advantageous embodiment, the actuator of the pivot actuation system comprises at least one set of electromagnets on one of the carriage or the chassis magnetically coupled to at least one of a set of magnetic motor elements on the other of the carriage or chassis, forming together an electromagnetic motor configured for rotating the carriage relative to the chassis.

In an advantageous embodiment, said at least one set of electromagnets are mounted on the carriage.

In an advantageous embodiment, said at least one set of electromagnets are mounted on an outer periphery of the carriage.

In an advantageous embodiment, the electromagnets are positioned around a top end of the carriage.

In an advantageous embodiment, the electromagnets are positioned around a bottom end of the carriage.

In an advantageous embodiment, said at least one set of magnetic motor elements is mounted on an outer housing or frame of the chassis.

In an advantageous embodiment, at least one set of magnetic motor elements is mounted on a wall portion of a tube of the railway guide system.

In an advantageous embodiment, the railway vehicle comprises a plurality of carriages interconnected by an inter-carriage coupling comprising a tubular section of compliant material allowing a certain degree of elastic rotational displacement between adjacent carriages.

In an advantageous embodiment, the railway system further comprises a pivot coupling limiter mechanism comprising at least one movable pin mounted on one of the carriage or chassis movably engageable in at least one recess formed on the other of the chassis or carriage. The movable pin is actuated actively in an unlocked position and is passively movable by a spring into a locking position in the recess, configured to limit the amplitude of rotational displacement of the carriage relative to the chassis and/or to lock the carriage relative to the chassis in a fixed position.

In an advantageous embodiment, the pivot coupling limiter mechanism comprises at least one pair of movable pins.

In an advantageous embodiment, the recess of the pivot coupling limiter mechanism comprises a shallow portion and a deep portion, the shallow portion extending over an arcuate angle greater than an arcuate angle over which the deep portion extends.

In an advantageous embodiment, the pivot coupling comprises a peripheral bearing comprising rollers arranged between the chassis and the carriage over an arcuate angle (α) around a bottom periphery of the carriage.

In another embodiment, the pivot coupling comprises a centre bearing aligned with the pivot axis.

In an advantageous embodiment, the railway guide system comprises a magnetic levitation railway track and a vacuum tube.

Further objects and advantageous aspects of the invention will be apparent from the claims, and from the following detailed description and accompanying figures.

### Brief Description of the drawings

The invention will now be described with reference to the accompanying drawings, which by way of example illustrate embodiments of the present invention and in which:
Fig. 1 is a schematic representation of a railway vehicle according to an embodiment of the invention;
Fig. 2 is a schematic representation of a railway vehicle according to another embodiment of the invention;
Fig. 3 is a schematic representation of a portion of a railway vehicle according to an embodiment of the invention, illustrating a coupling between carriages of the railway vehicle;
Fig. 4 is a flow diagram illustrating a control of the tilting angle of a carriage of the railway vehicle according to an embodiment of the invention;
Fig. 5 is a simplified schematic representation of a portion of a carriage of a railway vehicle illustrating the pivot axis and the centre of gravity of the carriage;
Fig. 6 is a simplified schematic cross-sectional view of a railway vehicle according to an embodiment of the invention;
Fig. 7 is a simplified cross-sectional view of a railway vehicle in a railway guide system according to another embodiment of the invention;
Fig. 8 is a simplified schematic view in cross-section of a railway vehicle according to another embodiment, illustrating a peripheral bearing of a carriage of the railway vehicle;
Fig. 9a is simplified schematic representation in cross-section of a carriage of a railway vehicle according to an embodiment of the invention, illustrating a pivot coupling limiter;
Fig. 9b is a view similar to figure 9a illustrating the pivot coupling limiter in a locked position;
Fig. 9c is simplified schematic representation in longitudinal cross-section of the pivot coupling limiter in a disengaged position;
Fig. 9d is a view similar to figure 9c showing the pivot coupling limiter in a locked position;
Fig. 9e is a view similar to figure 9c showing the pivot coupling limiter in a partially engaged position.

### Detailed description of embodiments of the invention

Referring to the figures, a railway system according to embodiments of the invention comprises a railway vehicle 2 that is guided by a railway guide system comprising a railway track 3 that may either be a wheel type railway track or a magnetic levitation type railway track. In certain embodiments, the railway guide system may comprise a railway tube 26 which may in particular be configured for applying a partial vacuum in the railway tube. The aforementioned railway guide systems 3 that may be implemented within the scope of this invention are *per se* known and need not be described in further detail.

Embodiments of the invention may thus be implemented with various types of railway systems, including an electromagnetic suspension rail (EMS) or an electrodynamic suspension rail (EDS) operating at ambient pressure or under conditions of reduced pressure (i.e. vacuum rail systems such as vactrain or hyperloop), as well as conventional railways including trams and subways moving on rails using wheels with rolling parts located in the vehicle chassis.

The railway vehicle 2 comprises at least one chassis 4 and at least one carriage 5 mounted on the chassis 4 via a pivot coupling 6. The carriage 5 is rotatably mounted with respect to the chassis 4 for rotation of the carriage relative to the chassis about a pivot axis *P.* The pivot axis *P* is in a fixed position or substantially fixed position relative to the chassis 4, the carriage 5 thus being rotatable relative to the chassis without any translational displacement. It may be noted that this distinguishes over conventional systems in which the axis of the centre of rotation of the carriage also has a translational movement component. An advantage of embodiments of the invention is that it can be adapted if needed to fit into railway gauges of existing infrastructures while providing larger angular displacement of the carriage than conventional vehicles for higher speed operation or for more comfort on curved sections of track.

The chassis 4 comprises a railway track engaging member 11 which may either comprise wheels for rolling engagement on a wheel type railway track, or a magnetic levitation system for non-contact engagement with a magnetic levitation railway track which may have various configurations as *per se* known in the art. The railway track engaging member may also be a combination of wheel type and magnetic levitation type systems which may for instance be used low speed operation, respectively high speed operation on various railway tracks, for instance for integrating in an existing infrastructure. The chassis 4 further comprises a drive system which may include a motor for providing propulsion force to the railway vehicle 2.

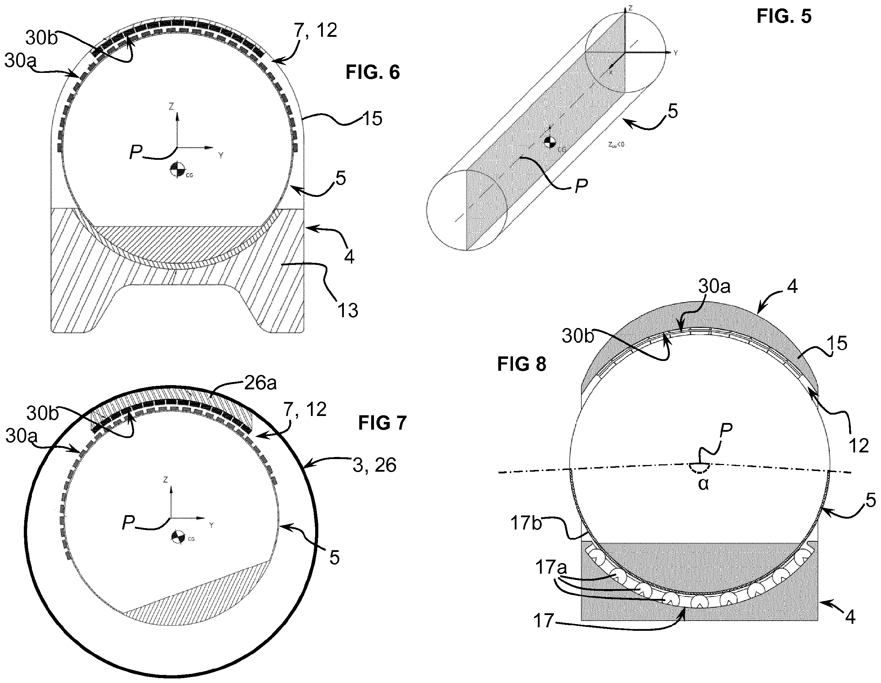

The railway vehicle further comprises a pivot actuation system 7 for control and actuation of the rotation of the carriage relative to the chassis 4 about the pivot axis *P.* The pivot actuation system comprises an electrically driven actuator 12 preferably mounted in the chassis 4, coupled via a mechanical and/or electromagnetic transmission to the carriage, according to an embodiment of the invention. The pivot actuation system 7 in other embodiments may however comprise an electrical actuator 12 comprising electromagnetic motor elements 30a mounted in the carriage 5 coupling electromagnetically to complementary elements 30b in the chassis 4, as illustrated in figures 6 and 8. In a variant, the complementary motor elements 30b may be mounted in the railway tube 26 as schematically illustrated in figure 7.

The pivot actuation system 7 further comprises a control system 14 connected to sensors including at least a sensor for measuring the rotation position of the carriage 5 relative to the chassis 4 and at least a sensor 14b for measuring centrifugal forces, for instance an inertial sensor. Various position sensors measuring the position and displacement of the carriage relative to the chassis that are *per se* well known in the sensing art may be used, such as optical, magnetic, capacitive, or inductive sensors or a combination of such sensors may be employed. Moreover, the position sensors may be independent and/or integrated in the drive system. Centrifugal (inertial) sensors are also well known and need not be further described herein.

The control system 14 of the pivot actuation system comprises a control unit 14a, 14c receiving signals from the sensors and connected to the actuator 12 in a control loop seeking to reduce the centrifugal force to a value of 0 or close to 0 within the limits of full pivoting rotation of the carriage relative to the chassis. The control unit may for instance comprise a computing unit 14a connected to a runtime controller 14c.

Depending on the selected settings, the centrifugal force may not be fully compensated by the amount of tilting such that a lateral force relative to the floor of the carriage is felt, for instance within a range for instance of ± 0.05g (i.e. approximately -0.34 to +0.34 Nms⁻² ) lateral force, or any value considered to be an acceptable lateral force applied on goods or passengers within the carriage. The angular range may also depend also on the allowable loads defined in regulation and standards e.g. to fit into railway standards where lateral and vertical load change for passengers cannot exceed 0.15g which defines the maximum angular range to ±29.6°.

In embodiments of the invention, the carriage 5 may be configured to rotate relative to the chassis 4 within an angular range of up to ± 45° relative to the gravitational vertical plane. The angular range will depend on the maximum velocity of the railway vehicle and the radius of the curve of the railway track being engaged at that velocity. An advantage of the configuration of the invention is that the angular range is not limited and may be as high as needed in view of the rotation of the carriage about a static pivot axis relative to the chassis.

The feedback control loop S1-S4 of the control unit is configured to assist in the pivoting of the carriage 5 and to provide damping to eliminate or reduce oscillations of the carriage relative to the chassis. Sensor measurement signals are fed S1 into the computing unit which processes S3 the signals and transmits them to the controller which converts S4 the signals to execution commands received S5 by the actuator for actuation of the carriage rotation.

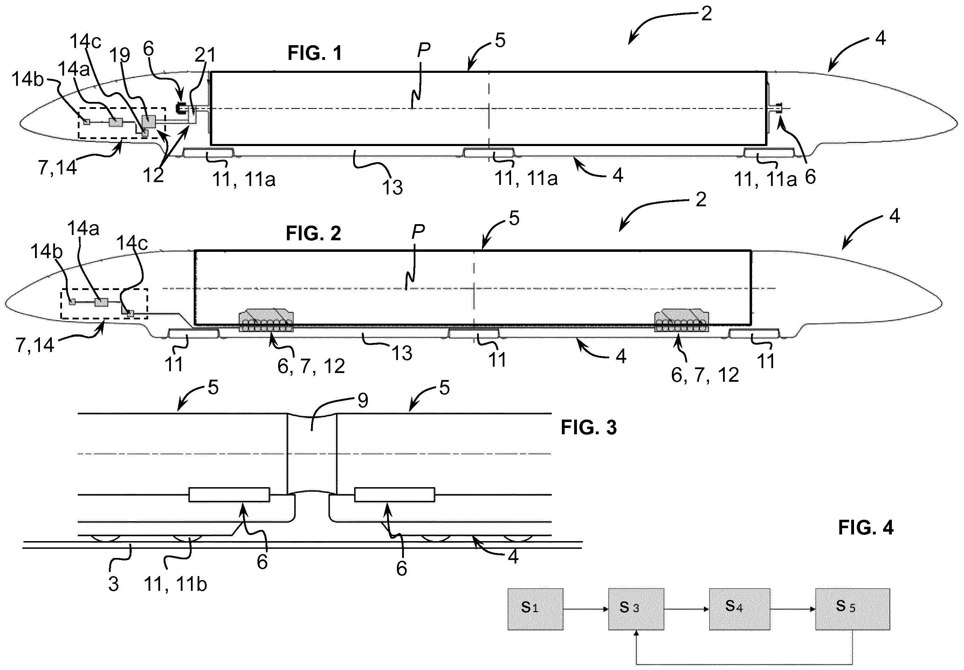

In the first embodiment illustrated in figure 1, the carriage 5 is coupled to the chassis via a pivot coupling 6 comprising a center bearing aligned with the pivot axis *P.* In this embodiment, the pivot actuation system comprises an actuator 12 comprising a motor 19 coupled via a transmission 21 to a transmission element fixedly mounted to the carriage, for instance a pinion on a centre axle coupled to a gear box forming part of the transmission 21. Various mechanical and electromagnetic actuators are *per se* known and may be implemented within the scope of the present invention. The center bearing may in particular be in the form of a roller bearing or a lubricated journal bearing, such bearings being *per se* known and need not be further described herein.

In a second embodiment illustrated schematically in figure 2, the pivot coupling 6 comprises an outer peripheral bearing engaging a tubular portion of the carriage 5, for instance a tubular housing of the carriage 5. In this variant, a plurality of carriages 5 may be coupled together via an inter-carriage coupling 9 that may comprise a movable coupling, in particular an elastically movable coupling allowing adjacent carriages to rotate relative to each other by a certain amount in order to take into account varying tilting positions of the carriages as a function of the centrifugal forces acting thereupon. The inter-carriage coupling 9 may comprise a reinforced tubular joining element made of an elastomeric material with reinforcement fibers therein to limit elastic deformation of the coupling within a pre-determined range. Examples of coupling materials are rubber-based material reinforced with aramid fibers or metal rods. Rotation between carriages arising from angle differences may be performed by torsion of such material or for instance on radial shaft seals.

The peripheral bearing 17 may advantageously comprise rollers 17a mounted on a bottom portion of the chassis 4 upon which the carriage 5 rests. The carriage 5 has a portion with a cylindrical shape (portion axisymmetric about the pivot axis *P*) extending at least partially over a bottom portion of the carriage along a segment angle α that allows rotation of the carriage over the predefined maximum tilt angle. The bearing surface 17b on the carriage 5 may be provided with a hardened material surface and the rollers with a complementary surface that may be of the same hardness or of a lower hardness configured for low wear and high life cycle. In a variant, the rollers may be fixedly coupled to the carriage 5 and roll on a complementary bearing surface fixedly mounted on the chassis, however this is generally less advantageous than the first variant.

In another embodiment, the peripheral bearing may comprise a pneumatic, or magnetic levitation system without rollers for substantially non-contact support of the carriage 5 on the chassis 4. The pneumatic bearing system may be controlled to increase pressure during sensing of a centrifugal force to allow low friction rotation of the carriage relative to the chassis. A combination of both roller and pneumatic bearings may also be implemented within the scope of the invention. It may be noted that a magnetic levitation system between the chassis and carriage may also be provided to reduce the frictional force or to lift the carriage off the chassis during pivoting rotation.

According to an aspect of the invention, the center of gravity *CG* of the carriage 5 is positioned below the pivot axis *P* of the carriage 5. Upon engaging a curve, the centrifugal force applied on the carriage imposes a moment of rotation about the pivot axis to incline the carriage relative to the chassis towards a position tending to cancel lateral forces acting on a load supported inside the carriage. In the absence of friction between the carriage and the chassis in the rotational movement, the centrifugal force acting on the center of gravity would provide full compensation for the centrifugal force to eliminate lateral forces acting on passengers or goods within the compartment of the carriage. However, due to friction and inertial forces related to changes in height of the track or due to irregularities in the track and, the pivot actuation system receiving information from the position sensors and inertial sensors assists rotation to overcome the frictional forces and provides a force to dampen oscillations in the rotational movement of the carriage as well as to reduce excessive acceleration due to inertial forces. For passenger comfort during the travel it is also important to reduce not only acceleration but also jerking movements due to a change in acceleration. The damping and assist function of the pivot actuation system also serves to control rotation of the carriage back to the neutral or vertical position of the carriage when coming out of a curve. The pivot actuation system 7 thus requires a relatively low power for achieving such functions compared to a fully active tilting system, since the main rotational force is provided by centrifugal force acting on the carriage. In comparison to conventional railway tilting systems, the lower power required for the tilting function also leads to reduced weight embarked weight and lower power consumption, both particularly advantageous characteristics for increasing performance and reducing energy consumption.

As best illustrated in figure 6, the actuator 12 of the pivot actuation system may comprise an electromagnetic motor formed between the carriage 5 and an outer housing or frame 15 of a carriage support portion 13 of the chassis 4. In another embodiment, as illustrated in figure 7, the pivot actuation system may comprise an electromagnetic motor formed between the carriage 5 and a portion of a railway tube 26 of the railway guide system 3, for instance a top wall portion 26a of the tube.

The actuator may comprise electromagnets 30a mounted on the carriage 5, for instance around an outer top wall of the carriage 5 as illustrated in figures 6, 7 and 8, the electromagnets connected to the control system 14. The electromagnets 30a magnetically couple to magnetic elements 30b provided on the housing 15 or on a railway system tube 26. The magnetic elements 30b may be made of permanent magnets or electromagnets. In a variant, the magnetic elements 30b may also be in the form of soft magnetic material elements to form with the electromagnets 30a a reluctance type of motor. The electromagnets 30a coupled to the magnetic elements 30b via an airgap forms a motor configured to produce torque about the pivot axis *P* of the carriage.

In preferred embodiments, the motor elements mounted on a carriage are provided as electromagnets that are connected to the control unit of the pivot actuation system mounted in the railway vehicle 2 so that active control of the tilt is performed directly by the control system within the railway vehicle. In the embodiments of figures 6 and 8, since both motor parts 30a, 30b for the pivot coupling are provided in the railway vehicle, the electromagnets may be provided either on the carriage 5 or on a the outer housing or frame 15 of the chassis 4, or on both the carriage 5 and the frame 15 of the chassis 4.

In a variant, the motor elements of the actuator 12 of the pivot actuation system 7 may also be provided along a bottom portion of the carriage, for instance adjacent or integrated in the peripheral bearing or separated from the bearing along any section of the bottom.

In the variants as illustrated in figure 7, in case the complementary motor elements 30b are mounted in the railway tube 26, this may either be in the form of electromagnets that are actuated only along the sections along which the train is moving, similar to principles already known for magnetic levitations systems that are switched progressively along the track as the railway vehicle advances.

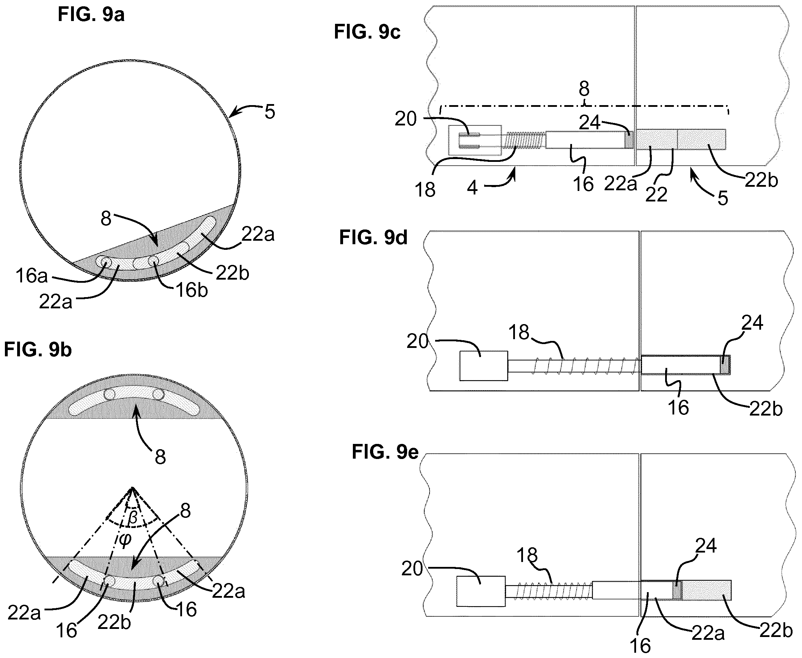

Referring to figures 9a to 9e, the railway vehicle may further comprise a pivot coupling limiter mechanism 8 that limits the amplitude of rotation between the carriage and chassis, in particular in case of power failure of the pivot actuation system. If there is a power failure of the pivot actuation system, it is desirable to fix the position of the carriage relative to the chassis to avoid swinging thereof. Moreover, pivot coupling limiter mechanism 8 may be used to prevent excessive rotation of the carriage relative to the chassis in the case of a faulty operation of the pivot actuation system. As illustrated in figures 9a to 9e, the pivot coupling limiter mechanism 8 may comprise movable pins 16 that are received in a recess 22, the respective pins and recess being mounted respectively in the carriage and chassis. Each movable pin may be slidably movable and biased by a spring 18 towards the recess and further coupled to an electromagnetic, pneumatic or hydraulic actuator that biases the pin 16 away from the corresponding recess. During normal operation, the pin actuator is powered and maintains the spring biased pin out of the recess, or at least partly out of a locking portion of the recess. Upon failure of the electrical system of the tilt actuator, the pin actuator is switched off and the spring biases the movable pins into the recess 22.

The recess may advantageously comprise a shallow portion 22a extending over an arc segment having an angle β, for instance in a range of 40 to 120°, and a deep portion 22b that further formed within the shallow portion recess 22a and having an arcuate segment angle ϕ that is less than β.

As illustrated in figure 9a, in case of power failure while the vehicle is moving through a corner, the carriage is rotated out from the center position and in order to allow movement with high speeds the two movable pins 16 are inserted into the recess 22, whereby one pin 16b is inserted directly into the deep portion 22b of the recess while the other pin 16a fits into the shallow portion 22a of the recess. This prevents the carriage from uncontrolled rotation due to greater angles than projected and as soon as the vehicle drives into the straight part of the track, coming out of the curve, the carriage moves itself into the vertical position and at this moment the both pins are inserted in the deep portion 22b of the slot as illustrated in figure 9b. This thus secures the position of the carriage to the chassis 4 in the vertical position and prevents further rotation of the carriage.

As illustrated in figure 9a there may be a single pair of pins however a plurality of pairs of pins may be provided, for instance as illustrated in figure 9b. Moreover, other arcuate slot or recess arrangements may be provided without departing from the spirit of the invention. For instance pins may engage in their own slot portions separated from each other.

As best illustrated in figure 9d, the free end of the pin comprises an elastic damping element 24, for instance made of rubber or another elastomeric material to reduce the knock when the pins engage in the deep portion of the recess or in a shallow portion of the recess. The pins may be made of steel or other robust material of sufficient cross-section and strength to overcome the shocks when engaging in the recesses during rotation of the carriage relative to the chassis.

The pivot coupling limiters may be actuated during normal operation of the railway vehicle, for instance at low speeds, during travel in long sections in a straight line where there are no curves anticipated, or when the railway vehicle is stationary such that when the vehicle is not powered the carriage is blocked in a locked position to the chassis.

Although not illustrated, the carriage coupling relative to the chassis may further be provided with mechanical damping elements to further reduce oscillations between the carriage and chassis in supplement to the electromagnetic damping provided by the pivot actuation system.

### List of references:

Railway system 1
**Railway vehicle 2**
   **chassis 4**
      drive system
         motor
      railway track engaging member (wheel, magnetic levitation) 11
      carriage support portion 13
         outer housing / frame 15
   **carriage (for transport of goods and/or passengers) 5**
   **pivot coupling 6**
      bearing
      centre bearing
      peripheral bearing 17
         rollers 17a
         roller bearing surface 17b
   **pivot actuation system 7**
      actuator 12
         motor 19
         transmission 21
         motor electromagnets 30a
         magnetic motor elements 30b
      control system 14
         control unit 14a, 14c
         sensor(s) 14b
   **pivot coupling limiters 8**
      movable pin 16
         spring 18
         pin actuator 20
            electromagnetic actuator
      recess 22
         shallow portion 22a
         deep portion 22b
      damping cushion 24
   **inter-carriage coupling 9**
**Railway guide system 3**
   railway track
   railway tube 26
      top wall portion 26a
      magnetic motor elements 30b

## Claims

1. **Railway system** (1) comprising a railway vehicle (2) movable along a railway guide system (3), the railway vehicle comprising a chassis (4) and a carriage (5) rotatably supported on the chassis (4) via a pivot coupling (6), the railway vehicle (2) further comprising a pivot actuation system (7) comprising an actuator (12) and a control system (14) connected to the actuator (12) and to sensors for actuation and control of the rotation of the carriage (5) relative to the chassis (4), wherein the carriage (5) is rotationally supported relative to the chassis (4) about a pivot axis (P) that remains in a static position with respect to the chassis (4), **characterized in that** the carriage (5) is having a mass distribution forming a center of gravity (CG) positioned below the pivot axis (P), the pivot actuation system (7) serving to assist and dampen passive rotation of the carriage (5) relative to the chassis (4) due to the torque generated by centrifugal force acting upon the centre of gravity (CG) about the pivot axis (*P*).

2. **Railway system** according any preceding claim, wherein the actuator (12) of the pivot actuation system (7) comprises at least one set of electromagnets (30a) on one of the carriage or the chassis magnetically coupled to at least one of a set of magnetic motor elements (30b) on the other of the carriage or chassis, forming together an electromagnetic motor configured for rotating the carriage relative to the chassis.

3. **Railway system** according to the preceding claim, wherein said at least one set of electromagnets are mounted on the carriage.

4. **Railway system** according to the preceding claim, wherein said at least one set of electromagnets are mounted on an outer periphery of the carriage.

5. **Railway system** according to the preceding claim, wherein the electromagnets are positioned around a top end of the carriage.

6. **Railway system** according to claim 4, wherein the electromagnets are positioned around a bottom end of the carriage.

7. **Railway system** according any preceding claim, wherein said at least one set of magnetic motor elements (30b) is mounted on an outer housing or frame (15) of the chassis (4).

8. **Railway system** according any preceding claim 1-6, wherein said at least one set of magnetic motor elements (30b) is mounted on a wall portion of a tube (26) of the railway guide system .

9. **Railway system** according any preceding claim, wherein the railway vehicle comprises a plurality of carriages (5) interconnected by an inter-carriage coupling (9) comprising a tubular section of compliant material allowing a certain degree of elastic rotational displacement between adjacent carriages.

10. **Railway system** according to any preceding claim further comprising a pivot coupling limiter mechanism (8) comprising at least one movable pin (16) mounted on one of the carriage or chassis movably engageable in at least one recess (22) formed on the other of the chassis (4) or carriage (5), the movable pin actuated actively in an unlocked position and passively movable by a spring (18) into a locking position in the recess, configured to limit the amplitude of rotational displacement of the carriage relative to the chassis and/or to lock the carriage relative to the chassis in a fixed position.

11. **Railway system** according to the preceding claim, wherein the pivot coupling limiter mechanism (8) comprises at least one pair of movable pins (16).

12. **Railway system** according to claim 10 or 11, wherein the recess (22) of the pivot coupling limiter mechanism comprises a shallow portion (22a) and a deep portion (22b), the shallow portion extending over an arcuate angle greater than an arcuate angle over which the deep portion (22b) extends.

13. **Railway system** according to any preceding claim, wherein the pivot coupling (6) comprises a peripheral bearing (17) comprising rollers (17a) arranged between the chassis and the carriage over an arcuate angle (α) around a bottom periphery of the carriage.

14. **Railway system** according to any preceding claim 1-12, wherein the pivot coupling (6) comprises a centre bearing aligned with the pivot axis (*P*).

15. **Railway system** according to any preceding claim wherein the railway guide system comprises a magnetic levitation railway track and a vacuum tube (26).

## Patentansprüche

1. Eisenbahnsystem (1), das ein Eisenbahnfahrzeug (2) umfasst, das entlang eines Eisenbahnführungssystems (3) bewegbar ist, wobei das Eisenbahnfahrzeug ein Untergestell (4) und einen Wagen (5), der via eine Schwenkkupplung (6) auf dem Untergestell (4) drehbar gestützt wird, umfasst, wobei das Eisenbahnfahrzeug (2) ferner ein Schwenkbetätigungssystem (7) umfasst, das einen Aktuator (12) und ein Steuersystem (14), das mit dem Aktuator (12) und mit Sensoren zur Betätigung und Steuerung der Drehung des Wagens (5) relativ zum Untergestell (4) verbunden ist, umfasst, wobei der Wagen (5) relativ zum Untergestell (4) um eine Schwenkachse (*P*), die mit Bezug auf das Untergestell (4) in einer statischen Position verbleibt, drehbar gestützt wird, **dadurch gekennzeichnet, dass** der Wagen (5) eine Masseverteilung aufweist, die einen Schwerpunkt (*CG*) bildet, der unter der Schwenkachse (*P*) positioniert ist, wobei das Schwenkbetätigungssystem (7) aufgrund des Drehmoments, das durch eine Zentrifugalkraft erzeugt wird, um die Schwenkachse (*P*) auf den Schwerpunkt (*CG*) wirkt, der Unterstützung und Dämpfung einer passiven Drehung des Wagens (5) relativ zum Untergestell (4) dient.

2. Eisenbahnsystem nach einem der vorhergehenden Ansprüche, wobei der Aktuator (12) des Schwenkbetätigungssystems (7) an einem des Wagens oder des Untergestells mindestens einen Satz von Elektromagneten (30a) umfasst, die an mindestens einen Satz von magnetischen Motorelementen (30b) am anderen des Wagens oder des Untergestells magnetisch gekoppelt sind und zusammen einen elektromagnetischen Motor bilden, der zum Drehen des Wagens relativ zum Untergestell ausgelegt ist.

3. Eisenbahnsystem nach dem vorherigen Anspruch, wobei der mindestens eine Satz von Elektromagneten am Wagen montiert ist.

4. Eisenbahnsystem nach dem vorhergehenden Anspruch, wobei der mindestens eine Satz von Elektromagneten an einem Außenumfang des Wagens montiert ist.

5. Eisenbahnsystem nach dem vorherigen Anspruch, wobei die Elektromagneten um ein oberes Ende des Wagens positioniert sind.

6. Eisenbahnsystem nach Anspruch 4, wobei die Elektromagneten um ein unteres Ende des Wagens positioniert sind.

7. Eisenbahnsystem nach einem der vorhergehenden Ansprüche, wobei der mindestens eine Satz von magnetischen Motorelementen (30b) an einem äußeren Gehäuse oder Rahmen (15) des Untergestells (4) montiert ist.

8. Eisenbahnsystem nach einem der vorhergehenden Ansprüche 1 bis 6, wobei der mindestens eine Satz von magnetischen Motorelementen (30b) an einem Wandabschnitt eines Rohres (26) des Eisenbahnführungssystems montiert ist.

9. Eisenbahnsystem nach einem der vorhergehenden Ansprüche, wobei das Eisenbahnfahrzeug eine Vielzahl von Wagen (5) umfasst, die mittels einer Wagenzwischenkupplung (9) verbunden sind, die einen rohrförmigen Bereich eines konformen Materials umfasst, das einen gewissen Grad des elastischen Drehversatzes zwischen benachbarten Wagen erlaubt.

10. Eisenbahnsystem nach einem der vorhergehenden Ansprüche, das ferner einen Schwenkkupplungsbegrenzungsmechanismus (8) umfasst, der mindestens einen bewegbaren Bolzen (16) umfasst, der an einem des Wagens oder des Untergestells montiert ist und in mindestens eine Ausnehmung (22), die am anderen des Untergestells (4) oder des Wagens (5) gebildet ist, bewegbar in Eingriff gebracht werden kann, wobei der bewegbare Bolzen in einer unverriegelten Position aktiv betätigt wird und in einer Verriegelungsposition in der Ausnehmung passiv durch eine Feder (18) bewegbar ist, dazu ausgelegt, die Amplitude eines Drehversatzes des Wagens relativ zum Untergestell zu begrenzen und/oder den Wagen relativ zum Untergestell in einer festen Position zu verriegeln.

11. Eisenbahnsystem nach dem vorhergehenden Anspruch, wobei der Schwenkkupplungsbegrenzungsmechanismus (8) mindestens ein Paar von bewegbaren Bolzen (16) umfasst.

12. Eisenbahnsystem nach Anspruch 10 oder 11, wobei die Ausnehmung (22) des Schwenkkupplungsbegrenzungsmechanismus einen flachen Abschnitt (22a) und einen tiefen Abschnitt (22b) umfasst, wobei sich der flache Abschnitt über einen Bogenwinkel erstreckt, der größer ist als ein Bogenwinkel, über den sich der tiefe Abschnitt (22b) erstreckt.

13. Eisenbahnsystem nach einem der vorhergehenden Ansprüche, wobei die Schwenkkupplung (6) ein Umfangslager (17) umfasst, das Rollen (17a) umfasst, die zwischen dem Untergestell und dem Wagen über einen Bogenwinkel (α) um einen unteren Umfang des Wagens angeordnet sind.

14. Eisenbahnsystem nach einem der vorhergehenden Ansprüche 1 bis 12, wobei die Schwenkkupplung (6) ein zentrales Lager umfasst, das auf die Schwenkachse (*P*) ausgerichtet ist.

15. Eisenbahnsystem nach einem der vorhergehenden Ansprüche, wobei das Eisenbahnführungssystem eine magnetische Eisenbahnschwebeschiene und ein Unterdruckrohr (26) umfasst.

## Revendications

1. Système ferroviaire (1) comprenant un véhicule ferroviaire (2) mobile le long d'un système de guidage ferroviaire (3), le véhicule ferroviaire comprenant un châssis (4) et une voiture (5) supportée, en rotation, sur le châssis (4) via un couplage pivotant (6), le véhicule ferroviaire (2) comprenant en outre un système d'actionnement de pivot (7) comprenant un actionneur (12) et un système de commande (14) raccordé à l'actionneur (12) et aux capteurs pour l'actionnement et la commande de la rotation de la voiture (5) par rapport au châssis (4), dans lequel :
la voiture (5) est supportée, en rotation par rapport au châssis (4) autour d'un axe de pivot (P) qui reste dans une position statique par rapport au châssis (4), **caractérisé en ce que**
la voiture (5) a une répartition de masse formant un centre de gravité (CG) positionné au-dessous de l'axe de pivot (P), le système d'actionnement de pivot (7) servant à assister et à amortir la rotation passive de la voiture (5) par rapport au châssis (4), due au couple généré par la force centrifuge agissant sur le centre de gravité (CG) autour de l'axe de pivot (P) .

2. Système ferroviaire selon l'une quelconque des revendications précédentes, dans lequel l'actionneur (12) du système d'actionnement de pivot (7) comprend au moins un ensemble d'électroaimants (30a) sur l'un parmi la voiture ou le châssis couplé, par voie magnétique, à au moins l'un d'un ensemble d'éléments de moteur magnétiques (30b) sur l'autre parmi la voiture ou le châssis, formant ensemble un moteur électromagnétique configuré pour faire tourner la voiture par rapport au châssis.

3. Système ferroviaire selon la revendication précédente, dans lequel ledit au moins un ensemble d'électroaimants est monté sur la voiture.

4. Système ferroviaire selon la revendication précédente, dans lequel ledit au moins un ensemble d'électroaimants est monté sur une périphérie externe de la voiture.

5. Système ferroviaire selon la revendication précédente, dans lequel les électroaimants sont positionnés autour d'une extrémité supérieure de la voiture.

6. Système ferroviaire selon la revendication 4, dans lequel les électroaimants sont positionnés autour d'une extrémité inférieure de la voiture.

7. Système ferroviaire selon l'une quelconque des revendications précédentes, dans lequel ledit au moins un ensemble d'éléments de moteur magnétiques (30b) est monté sur un logement ou bâti externe (15) du châssis (4).

8. Système ferroviaire selon l'une quelconque des revendications 1 à 6, dans lequel ledit au moins un ensemble d'éléments de moteur magnétiques (30b) est monté sur une partie de paroi d'un tube (26) du système de guidage ferroviaire.

9. Système ferroviaire selon l'une quelconque des revendications précédentes, dans lequel le véhicule ferroviaire comprend une pluralité de voitures (5) interconnectées par un couplage entre-voiture (9) comprenant une section tubulaire de matériau souple permettant un certain degré de déplacement rotatif élastique entre les voitures adjacentes.

10. Système ferroviaire selon l'une quelconque des revendications précédentes, comprenant en outre un mécanisme de limitation de couplage de pivot (8) comprenant au moins une broche mobile (16) montée sur l'un parmi la voiture ou le châssis pouvant se mettre en prise, de manière mobile, dans au moins un évidement (22) formé sur l'autre parmi le châssis (4) ou la voiture (5),
la broche mobile étant activement actionnée dans une position déverrouillée et passivement mobile grâce à un ressort (18) dans une position de verrouillage dans l'évidement, configurée pour limiter l'amplitude de déplacement rotatif de la voiture par rapport au châssis et/ou pour verrouiller la voiture par rapport au châssis dans une position fixe.

11. Système ferroviaire selon la revendication précédente, dans lequel le mécanisme de limitation de couplage de pivot (8) comprend au moins une paire de broches (16) mobiles.

12. Système ferroviaire selon la revendication 10 ou 11, dans lequel l'évidement (22) du mécanisme de limitation de couplage de pivot comprend une partie peu profonde (22a) et une partie profonde (22b), la partie peu profonde s'étendant sur un angle arqué supérieur à un angle arqué sur lequel la partie profonde (22b) s'étend.

13. Système ferroviaire selon l'une quelconque des revendications précédentes, dans lequel le couplage pivotant (6) comprend un palier périphérique (17) comprenant des rouleaux (17a) agencés entre le châssis et la voiture sur un angle arqué (α) autour d'une périphérie inférieure de la voiture.

14. Système ferroviaire selon l'une quelconque des revendications 1 à 12, dans lequel le couplage pivotant (6) comprend un palier central aligné avec l'axe de pivot (P).

15. Système ferroviaire selon l'une quelconque des revendications précédentes, dans lequel le système de guidage ferroviaire comprend une voie de chemin de fer à lévitation magnétique et un tube à vide (26).
